# EUROPÄISCHE PATENTANMELDUNG

(11) **EP 2 830 392 A1**
(43) Veröffentlichungstag der Anmeldung: **28.01.2015**
(21) Anmeldenummer: 14002536.2
(22) Anmeldetag: 22.07.2014
(51) Int. Cl.: H05B 6/10, C21D 1/10, C21D 1/667, H05B 6/40, C21D 9/00

(54) **Vorrichtung zur induktiven Erwärmung und Kombination einer derartigen Vorrichtung mit einem Werkstück**

(30) Priorität: 25.07.2013 DE 102013013162
(71) Anmelder: Idea GmbH, 72285 Pfalzgrafenweiler-Bösingen (DE)
(72) Erfinder: Jehnert, Hubertus, 72250 Freudenstadt-Musbach (DE); Häußler, Andreas, 72250 Freudenstadt-Frutenhof (DE)
(74) Vertreter: Suchy, Ulrich Johannes

(57) **Zusammenfassung**

Die Erfindung betrifft Vorrichtung zum induktiven Härten von Werkstücken (2) mit einer Induktionsspule (21) zum Umfassen des Werkstücks (2) und einem Kern (3) als Feldführung. Um einen das Werkstück (2) nicht rotieren zu müssen und einen hohen Wirkungsgrad zu erreichen, schlägt die Erfindung vor, dass zwischen Induktionsspule (21) und Werkstück (2) ein Mindestabstand gewahrt wird und dass innerhalb der Induktionsspule (21) eine Abschreckbrause (22) angeordnet ist.

## Beschreibung

Die Erfindung betrifft eine Vorrichtung zur induktiven Erwärmung, insbesondere zur Härtung, von Werkstücken mit den Merkmalen des Oberbegriffs des Anspruchs 1, sowie die Kombination einer derartigen Vorrichtung mit einem Werkstück nach Anspruch 8.

Das Erwärmen von Werkstücken mittels Induktion ist seit langem bekannt. Insbesondere zum Härten, Löten und Aufschrumpfen wird dazu mittels einer hochfrequent durchflossenen Induktionsspule ein Magnetfeld erzeugt, welches in einem Werkstück, beispielsweise einem zu härtenden Zahnrad, einen Wirbelstrom induziert. Der innere Widerstand im Werkstück sorgt für eine Erhitzung des Werkstücks. In einer sehr einfachen Anordnung wird das Werkstück von einem wassergekühlten Kupferrohr als Induktionsspule mit einer einzigen Windung umschlossen. Die Einspeisung und Ausspeisung des Stroms erfolgt somit an einer Stelle des Umfangs der Induktionsspule. An dieser Speisestelle ist das Magnetfeld inhomogen. Dies führt dazu, dass das Werkstück entlang des Umfangs ungleichmäßig erwärmt wird. Um zu vermeiden, dass es zu einer ungleichmäßigen Erwärmung kommt, wird das Werkstück deshalb häufig relativ zur Induktionsspule rotiert. Dies erfordert einen entsprechend hohen apparativen Aufwand. Das Werkstück wird dabei möglichst eng von der Induktionsspule umschlossen, damit es von einem möglichst großen Teil des Magnetfelds durchdrungen wird.

Die Druckschrift DE 10 2008 021 306 A1 zeigt eine Vorrichtung zum induktiven Härten bei der das magnetische Feld durch Feldführungselemente derart gelenkt wird, dass ein homogenerer Verlauf des Magnetfelds und eine verbesserte Verteilung des Aufheizbereichs erzielt wird. Die Feldführungselemente sind jeweils an Seitenflächen des Aufheizbereichs angeordnet und bestehen aus einem magnetisierbaren Material, insbesondere aus Eisenpulverstoff oder Ferrit. Allerdings erfordert auch hier die mangelnde Homogenität des Magnetfelds über den Umfang der Induktionsspule, dass das Werkstück gedreht wird. Außerdem muss das Werkstück zum Abschrecken, was üblicherweise durch Wasser mittels einer Abschreckbrause erfolgt, aus der Vorrichtung herausgeholt werden, da ansonsten die Zugänglichkeit fehlt.

Der Erfindung liegt die Aufgabe zugrunde, einen vereinfachten Aufbau für eine Vorrichtung zum induktiven Erwärmen zu schaffen.

Diese Aufgabe wird erfindungsgemäß durch die Vorrichtung mit den Merkmalen des Anspruchs 1 sowie der Kombination einer Vorrichtung mit einem zu erwärmenden Werkstück mit den Merkmalen des Anspruchs 8 gelöst. Die Erfindung schlägt eine Vorrichtung zur induktiven Erwärmung, und zwar insbesondere zur Härtung, von Werkstücken, mit einer Induktionsspule zum Umfassen des Werkstücks vor. Dabei ist mit einer Induktionsspule insbesondere ein einfach oder mehrfach gewickelter elektrischer Leiter gemeint. Möglich ist aber auch die Bildung aus mehreren gewickelten Segmenten, die sich der Funktion der Magnetfelderzeugung nach zu einer gedachten, einzigen Induktionsspule ergänzen. Die einzelnen Segmente können dabei insbesondere in Serie oder parallel geschaltet sein. Mit "Umfassen" ist gemeint, dass zumindest ein Teil des Werkstücks innerhalb eines gedachten, die Induktionsspule umschreibenden Volumens liegt. Weiterhin umfasst die Vorrichtung einen Kern als Feldführung. Mit einem Kern ist ein Element aus einem weichmagnetischem Werkstoff gemeint, also insbesondere aus einem Ferrit. Als Ferrite werden magnetisierbare keramische Sinter-Werkstoffe auf Basis von Metalloxiden verstanden. Alternativ sind sogenannte Pulverkerne möglich, bei denen weichmagnetische Pulver in einer Bindermatrix gefasst sind. Als Kern können außerdem Blechpakete dienen, wie sie von Transformatoren bekannt sind. Der Kern ist ein gegenüber dem Werkstück gesondertes Element, auch wenn sich Kern und Werkstück zur Feldführung ergänzen können.

Die erfindungsgemäße Vorrichtung ist dadurch gekennzeichnet, dass die Induktionsspule das Werkstück nicht wie bisher mit möglichst geringen Abstand sondern mit einem minimalen radialen Abstand zwischen Werkstück und Induktionsspule von mindestens 5 mm, insbesondere mehr als 10 mm und vorzugsweise mit mehr als 15 mm umschließt. Mit radial ist hier die Richtung ausgehend von einer gedachten Mittellinie der Induktionsspule gemeint, um die der elektrische Leiter gewickelt ist, wobei die Wicklung nicht kreisrund sein muss. Durch den radialen Abstand wird erreicht, dass das Magnetfeld weitestgehend ausschließlich durch den Kern zum Werkstück geleitet werden kann, während bei den bekannten Vorrichtungen ein zumindest erheblicher Teil durch die Luft auf das Werkstück übertragen wird. Auch bei der Vorrichtung gemäß der Druckschrift DE 10 2008 021 306 A1 verläuft durch den sogenannten Nahfeldeffekt ein Teil des Magnetfelds an den Feldführungselementen vorbei durch die Luft direkt in das Werkstück, wodurch sich der Rand des Werkstücks stärker erhitzt als in der Regel gewollt. Durch den Abstand von Induktionsspule und Werkstück kann somit eine gezielter geometrische Ausbildung des Aufheizbereichs und die Vermeidung des Nahfeldeffekts erreicht werden. Insbesondere ist radial innerhalb der Induktionsspule eine Abschreckbrause angeordnet. Mit radial innerhalb ist eine zumindest teilweise Anordnung innerhalb eines gedachten, die Induktionsspule umhüllenden Volumens gemeint. Entscheidend ist, dass der Abstand zwischen dem zu erwärmenden Werkstück und der Induktionsspule zusätzlich genutzt wird und dass das Werkstück ohne zeitlichen Verzug direkt nach dem Erhitzen mittels der Abschreckbrause mit Wasser oder einem anderen Kühlmedium abgekühlt und/oder abgeschreckt werden kann. Insbesondere ist es nicht notwendig, das Werkstück relativ zur Induktionsspule zu bewegen, um es abzuschrecken. Das Werkstück kann ohne eine zusätzliche Bewegungseinrichtung innerhalb der erfindungsgemäßen Vorrichtung erhitzt und abgeschreckt werden. Hierdurch wird ein einfacher, robuster Aufbau und ein schneller Prozessablauf ermöglicht. Außerdem kann die Abschreckbrause dazu genutzt werden, auch die Induktionsspule mit Kühlflüssigkeit zu versorgen, insbesondere dadurch, dass die Abschreckbrause eine Kühlfläche für die Induktionsspule bildet.

Vorzugsweise ist die Abschreckbrause nicht magnetisierbar und insbesondere nicht elektrisch leitfähig. Insbesondere ist die Abschreckbrause aus Kunststoff. Hierdurch wird erreicht, dass das Magnetfeld der Induktionsspule zumindest weitgehend unbeeinflusst durch die Abschreckbrause bleibt und insbesondere in der Abschreckbrause keine Ströme induziert werden.

In einer bevorzugten Ausführungsform weist der Kern ein im Wesentlichen rohrförmiges Außenelement auf. Der Querschnitt ist dabei insbesondere kreisförmig, er kann jedoch auch von der Kreisform abweichen, also beispielsweise oval oder vieleckig sein. Auch muss der der Querschnitt nicht unbedingt über den gesamten Umfang geschlossen sein, auch wenn dies aufgrund der Homogenität des Magnetfelds bevorzugt ist.

Das Außenelement umschließt radial insbesondere die Induktionsspule, so dass durch das Außenelement das Magnetfeld der Induktionsspule aufgenommen wird. Innerhalb des Außenelements ist ein im Wesentlichen zylindrisches Innenelement des Kerns angeordnet, wobei die Mittelachsen von Innen- und Außenelement insbesondere übereinstimmen. Mit "zylindrisch" ist insbesondere eine gerade, kreiszylindrische Form eines Vollkörpers gemeint, möglich ist jedoch auch ein abweichender Querschnitt, also beispielsweise ein ovaler oder vieleckiger Querschnitt, ebenso eine zumindest teilweise Höhlung innerhalb des Innenelements sowie grundsätzlich auch ein schiefer Zylinder. Auch das Innenelement muss keinen geschlossenen Umfang aufweisen, auch wenn dies bevorzugt ist. Insbesondere weisen Innen- und Außenelement miteinander korrespondierende Querschnitte auf. Die Abschreckbrause umfasst insbesondere das Innenelement.

Innen- und das Außenelement sind vorzugsweise jeweils stirnseitig verbunden. Innen- und Außenelement bilden so mit den stirnseitigen Verbindungen einen integralen Kern.

Das Innenelement weist eine quer zu seiner Längsrichtung angeordnete, das Innenelement insbesondere vollständig durchsetzende Aussparung als Werkstückaufnahme auf. Die Aussparung erstreckt sich in Längsrichtung des Innenelements insbesondere nur über weniger als die Hälfte, insbesondere über weniger als ein Viertel der Länge des Innenelements. Ohne den Erfindungsgedanken zu verlassen, kann die Aussparung jedoch auch deutlich länger sein, bis dahin, dass das Innenelement durch die Aussparung ersetzt wird.

Durch diese Konfiguration des Kerns wird eine besonders gute Führung des Magnetfelds von der Induktionsspule zum Werkstück ermöglicht. Gegenüber bekannten Vorrichtungen wird der Wirkungsgrad hierdurch erheblich verbessert, es kann also mit einer deutlich niedrigeren Induktionsspulenleistung die gleiche Heizleistung erzeugt werden.

Ein Werkstück, das in die Aussparung zur Erwärmung eingelegt wird, überragt vorzugsweise im Wesentlichen nicht radial das Innenelement. "Im Wesentlichen" schließt hier ein zumindest teilweises Überragen des Werkstücks ein um maximal 10 % bezogen auf die beiden Durchmesser gedachter Kreise, die das Werkstück und das Innenelement umschreiben. Würde das Werkstück das Innenelement weiter überragen, so könnte es aufgrund des Nahfeldeffekts zu einer Magnetfeldübertragung abseits des Kerns, also insbesondere durch die Luft, kommen, während der Anteil des vom Kern übertragenen Magnetfelds geringer würde. Überragt das Innenelement das Werkstück, kann somit ein besonders homogenes Magnetfeld im Werkstück erzeugt werden.

Für die Induktionsspule muss es eine Anschlussleitung geben. Bei der beschriebenen Anordnung mit Außen- und Innenelement sowie stirnseitger Verbindung muss daher der Kern von der Anschlussleitung durchquert werden. Hiermit ist gegenüber einer ideal kreissymmetrischen Ausbildung des Magnetfelds eine Inhomogenität in Kauf zu nehmen. Um ein möglichst homogenes Magnetfeld zu erzeugen, schlägt die Erfindung vor, dass die stirnseitige Verbindung eine Öffnung zur Durchführung der Anschlussleitung aufweist.

Vorzugsweise ist der Kern öffenbar und schließbar. Damit ist gemeint, dass mindestens zwei Teile des Kerns zueinander bewegbar sind, insbesondere in einer im Wesentlichen axialen Richtung. Hierdurch wird erreicht, dass ein Werkstück in das Innere des durch den Kern definierten Volumens eingelegt werden kann. Insbesondere bei einem Kern mit Außen- und Innenelement sowie stirnseitger Verbindung ist hierdurch eine einfache herzustellende Konstruktion und eine gut zu automatisierende Be- und Entladung der Vorrichtung mit Werkstücken erreichbar.

Vorzugsweise wird als Leitermaterial für die Induktionsspule eine Hochfrequenzlitze verwendet, also ein Leiter aus einer Vielzahl geflochtener Einzeldrähte, die untereinander isoliert sind. Eine Hochfrequenzlitze hat gegenüber dem sonst bei Härtevorrichtungen üblichen Kupferrohr den Vorteil, dass eine Induktionsspule deutlich leichter durch Wickeln herstellbar ist, da kein aufwändiger Biegevorgang notwendig ist. Gegenüber einem Volldraht besteht der Vorteil, dass der Skin-Effekt und der Proximity-Effekt und somit der Leitungsverlust geringer ist. Der Einsatz einer Hochfrequenzlitze ist insbesondere auch bei Vorrichtungen zum induktiven Härten möglich, wenn die oben beschriebene Kern-Konfiguration mit stirnseitig verbundenem Außen- und Innenelement Verwendung findet, da hier der Wirkungsgrad besonders hoch ist und somit die Induktionsspulenleistung geringer als bisher sein kann. Während die sehr hohen Ströme bisher typischerweise wasserdurchflossene Kupferrohre als Leiter erforderlich machten, ermöglicht die erfindungsgemäße Vorrichtung luftgekühlte Leiter. Die geringeren elektrischen Leistungen ermöglichen außerdem einfachere Schaltelemente. Begünstigt wird der Einsatz einer Hochfrequenzlitze außerdem durch eine Konfiguration der Vorrichtung mit einer Abschreckbrause, derart dass ein Kühlmediums auch kühlend auf die Induktionsspule wirkt, da hierdurch einer Überhitzung entgegen gewirkt wird. Auch ein Zyklus, bei dem die Induktionsspule nur über weniger als die Hälfte der Zeit im Induktionsbetrieb ist, begünstigt den Einsatz von Hochfrequenzlitzen, da sich die Induktionsspule zwischen den Induktionszeiten abkühlen kann. Die Erfindung schlägt einen Zyklus mit abwechselndem Induktions- und Abschreckbetrieb vor. Ergänzt werden kann dies durch eine Phase zum Herausnehmen und Einlegen von Werkstücken. Um auf einen Werkstückdurchsatz zu kommen, der beispielsweise mit Rundtaktautomaten zu vergleichen ist, bei denen an einer Station nur geheizt wird, schlägt die Erfindung vor, mehrere erfindungsgemäße Vorrichtungen zu einer Gesamtvorrichtung zu kombinieren und die jeweiligen Zyklen so zu synchronisieren, dass die Induktionszeiten versetzt sind, also immer nur an einer der Vorrichtungen die Induktionsspule in Betrieb ist. Hierdurch wird die maximale Gesamtleistung begrenzt, was den Einsatz einfacherer Schalttechnik gegenüber herkömmlichen Anlagen ermöglicht.

In einer bevorzugten Ausführungsform weist die Vorrichtung mehr als eine Windung, insbesondere mehr als zwei und vorzugsweise mehr als vier auf. Dies wird insbesondere bei Verwendung eines im Wesentlichen luftgekühlten Leiters und hier insbesondere bei Verwendung einer Hochfrequenzlitze möglich. Während beispielsweise wasserdurchflossene Kupferrohre als Leiter aufgrund des zu erzeugenden Durchflusses bei gegebenen geometrischen Restriktionen begrenzt in der Windungszahl sind, können Hochfrequenzlitzen selbst bei begrenztem Raum vielfach gewunden zu einer Induktionsspule gewickelt werden. Gegenüber den üblichen Induktionsspulen zur Härtung mit nur einer Windung hat dies den erheblichen Vorteil, dass die Inhomogenität im Bereich der Anschlussleitungen deutlich schwächer ausfällt. Je mehr Windungen die Induktionsspule aufweist, desto homogener ist das erzeugte Magnetfeld über den Umfang der Induktionsspule. Durch die größere Homogenität braucht das Werkstück während des induktiven Aufwärmvorgangs nicht relativ zur Induktionsspule rotiert werden. Hierdurch entfällt gegenüber herkömmlichen Vorrichtungen mit Rotationseinrichtung ein erheblicher apparativer Aufwand.

Die Windungen können insbesondere in der Form eines geraden Kreiszylinders angeordnet sein, also bei einer einlagigen Anordnung schraubenlinienförmig. Alternativ könnte die Anordnung aber auch beispielsweise konisch, doppelkonisch, trompetenförmig oder dergleichen sein. Dies kann sich insbesondere bei hohen Werkstücken zur Anpassung des Magnetfeldes anbieten.

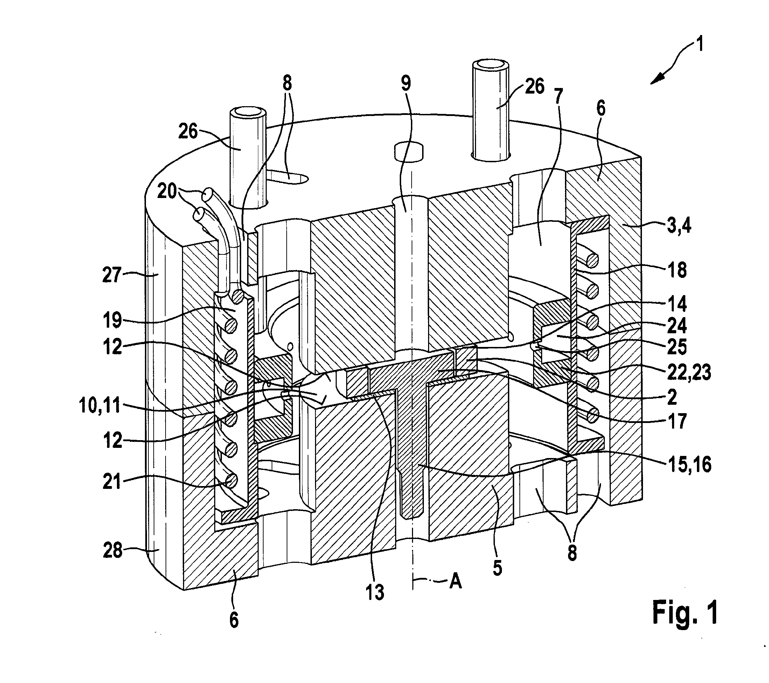

Die Erfindung wird nachfolgend anhand eines Ausführungsbeispiels erläutert. Die einzige Figur 1 zeigt eine perspektivische Schnittdarstellung der erfindungsgemäßen Vorrichtung 1. Die Vorrichtung 1 dient zum Härten eines Werkstücks 2, hier eine in etwa ringförmige Nockenscheibe. Die Vorrichtung 1 weist einen Kern 3 aus einem Ferrit auf. Der Kern 3 besteht aus einem geschlossenen kreis-zylindrischen, rohrförmigen Außenelement 4, einem kreis-zylindrischen Innenelement 5 und zwei kreisförmigen, kreiszylindrischen, scheibenförmigen Verbindungen 6, die das Innenelement 5 mit dem Außenelement 4 verbinden. Die Längsachsen A des Außenelements 4 und des Innenelements 5 fallen zusammen und bilden gleichzeitig die Längsachse der Vorrichtung 1. Die nachfolgenden Angaben "radial", "axial" und "längs" beziehen sich dementsprechend auf die Längsachse A. Die Längsachse A steht senkrecht, eine Lage quer zur Längsachse A ist somit waagerecht. Aufgrund des wesentlich kleineren Außendurchmessers des Innenelements 5 gegenüber dem Innendurchmesser des Außenelements 4 besteht ein kreisringförmiger Zwischenraum 7. Dieser Zwischenraum 7 ist durch mehrere Öffnungen 8 in beiden Verbindungen 6 mit der Außenseite der Vorrichtung 1 verbunden. Das Innenelement 5 ist rohrförmig, es weist eine mittige zylindrische Bohrung 9 auf, die das Innenelement 5 vollständig längs durchsetzt. Der Durchmesser der Bohrung beträgt nur etwa ein Sechstel des Außendurchmessers des Innenelements 5. In Längsrichtung mittig weist das Innenelement 5 eine Aussparung 10 als Werkstückaufnahme 11 auf. Die Aussparung 10 durchsetzt das Innenelement 5 vollständig quer, misst aber in Längsrichtung nur etwa ein Zehntel des Kerns 3. Durch die Aussparung 10 weist das Innenelement 5 zwei gegenüberliegende, parallele, ringförmige Stirnseiten 12 auf, die die Werkstückaufnahme 11 in Längsrichtung im Wesentlichen begrenzen und Feldaustrittsflächen für das Magnetfeld bilden. An der unteren der beiden Stirnseiten 12 ist eine dünne Aufnahmescheibe 13 aus Glimmer, einem hitzebeständigen Werkstoff, angeordnet.

Die Aufnahmescheibe 13 dient somit dazu, dass der Kern 3 nicht in direktem Kontakt mit dem Werkstück 2 gerät, da dieses sehr heiß werden kann und eine wiederholte Hitzeeinwirkung auf das Kernmaterial zu Verschleiß führen kann. Alternativ oder zusätzlich kann ein Teil des Kerns 3, insbesondere ein Teil des Innenelements 5 als austauschbares Verschleißteil gestaltet sein (nicht dargestellt). Zur oberen Stirnseite 12 hat das Werkstück 2 dagegen keinen Kontakt, sondern es besteht ein enger Spalt 14, ebenfalls um thermisch bedingten Verschleiß am Kern 3 zu vermeiden.

Das Werkstück 2 wird von einem Aufnahmedorn 15 aus einem nichtmagnetischen Edelstahl axial zentriert in der Werkstückaufnahme 11 gehalten. Der Aufnahmedorn 15 ist rotationssymmetrisch mit einem Schaft 16, dessen Durchmesser im Wesentlichen der Bohrung 9 entspricht, in der er zentrierend aufgenommen ist. Im Bereich der Werkstückaufnahme 11 ist der Durchmesser des Aufnahmedorns 15 zu einem Teller 17 erweitert. Der Außendurchmesser entspricht im Wesentlichen dem Innendurchmesser des Werkstücks 2. Das Werkstück 2 ist im Wesentlichen ringförmig, wobei der dargestellte Außendurchmesser nur etwa 60 Prozent des Außendurchmessers des Innenelements 5 entspricht. Da es sich bei dem Werkstück 2 um eine Nocke handelt, ist das Werkstück an einer Stelle des Umfangs zu einer Ausbuchtung radial erweitert, was in der dargestellten Schnittebene jedoch nicht erkennbar ist. Im Bereich der Ausbuchtung überragt das Werkstück 2 das Innenelement 5 um etwa 5 Prozent. Insgesamt überragt das Werkstück 2 somit im Wesentlichen nicht das Innenelement 5.

Im Zwischenraum 7 ist radial außen eine ringförmige Spulenaufnahme 18 aus Kunststoff mit einem nach außen zum Außenelement 4 offenen C-Profil, das sich über die gesamte axiale Länge des Zwischenraums 7 erstreckt. Im Bereich der Schnittebene der Darstellung ist die Spulenaufnahme 18 an der oberen Seite für eine Durchbrechung 19 durchbrochen. Die Durchbrechung 19 ist in etwa deckungsgleich mit einer Öffnung 8 des Kerns 3, so dass durch die Öffnung 8 und die Durchbrechung 19 hindurch Anschlussleitungen 20 einer Induktionsspule 21 in die Spulenaufnahme 18 geführt sind. Im Inneren der Spulenaufnahme 18 ist die Induktionsspule 21 mit sechs Windungen angeordnet. Sowohl die Induktionsspule 21 als auch die Anschlussleitungen 20 sind von einer Hochfrequenzlitze gebildet. Die Induktionsspule 21 ist somit im Wesentlichen an der Innenseite des Außenelements 4 angeordnet und umfasst das Werkstück 2. Der minimale radiale Abstand von Induktionsspule 21 zu Werkstück 2, der sich im Bereich der Ausbuchtung (nicht dargestellt) befindet, beträgt etwa 16 mm.

Axial mittig schließt sich an der radialen Innenseite der Spulenaufnahme 18 eine ringförmige Abschreckbrause 22 an. Die Abschreckbrause 22 besteht aus einem C-förmigen Profil 23 aus Kunststoff, wobei die offene Seite des Profils 23 an die Spulenaufnahme 18 angrenzt, so dass im Inneren des Profils 23 ein geschlossener Brausenkanal 24 gebildet ist. Auf der radialen Innenseite weist die Abschreckbrause 22 über den Umfang verteilt kleine Öffnungen 25 auf, durch die Wasser als Kühlmedium austreten kann. Die Zuleitung des Wassers erfolgt über drei Anschlussrohre 26 aus Kunststoff, die von der oberen Außenseite der Vorrichtung 1 aus senkrecht durch eine Öffnung 8 des Kerns 3 hindurch in den Zwischenraum 7 und bis zur oberen Seite der Abschreckbraus 22 ragen. Die drei Anschlussrohre 26 sind über den Umfang verteilt, so dass aufgrund der Schnittdarstellung nur zwei zu sehen sind. Die Abschreckbrause 22 hat eine axiale Erstreckung, die nur etwa einem Drittel des Zwischenraums 7 entspricht. Radial nach innen ragt sie mit radialem Abstand in Richtung der Werkstückaufnahme 11, so dass Wasser, das von der Abschreckbrause 22 versprüht wird, in Richtung des Werkstücks 2 gelangt, aber dann auch aus der Aussparung 10 wieder abfließen kann. Das Wasser kann aus Öffnungen 8 des Kerns 3 insbesondere im Bereich der unteren Verbindung 6 aus der Vorrichtung 1 abfließen. Neben der Kühlung des Werkstücks 2 erfolgt über die an den Brausenkanal 24 anschließende Spulenaufnahme 18 auch eine Kühlung der Induktionsspule 21, dadurch dass der Brausenkanal 24 eine Kühlfläche bildet. Auch ist es möglich, dass das Wasser in die Spulenaufnahme 18 gelangt, so dass die Induktionsspule 21 eventuell eine zusätzliche Kühlung durch Wasser erfährt. Ansonsten ist die Induktionsspule 21 jedoch luftgekühlt.

Im Folgenden wird der Ablauf eines Härtezyklus und die Funktionsweise beschrieben. Ausgehend von dem in der Figur dargestellten Zustand mit einem fertig gehärteten Werkstück 2 wird zunächst die Vorrichtung 1 geöffnet. Hierbei kommt zum Tragen, dass der Kern 3 aus einem Oberteil 27 und einem Unterteil 28 besteht und somit in axialer Richtung öffenbar und schließbar ist. Zu dem Oberteil 27 gehört die obere Hälfte des Außenelements 4 und des Innenelements 5 sowie die obere Verbindung 6, während der Rest des Kerns 3 zum Unterteil 28 gehört. Grundsätzlich kann entweder das Oberteil 27 nach oben gehoben oder das Unterteil 28 abgesenkt oder beide Bewegungen kombiniert werden, entscheidend ist die Relativbewegung. Aufgrund des Anschlusses der Induktionsspule 21 und der Abschreckbrause 22 vom Oberteil 27 aus, werden diese Elemente samt der Spulenaufnahme 18 mit dem Oberteil 27 mitbewegt, was aber nicht zwingend ist. Durch dieses Öffnen der Vorrichtung 1 wird das Werkstück 2 für einen Bediener oder ein Handhabungsgerät zugänglich und kann dabei ausgetauscht werden, gegebenenfalls inklusive des Aufnahmedorns 15.

Im nächsten Schritt wird die Vorrichtung 1 wieder geschlossen und anschließend an die Induktionsspule 21 mit einem Wechselstrom beaufschlagt. Hierdurch wird ein Magnetfeld erzeugt, welches durch den Kern 3 geführt wird. So entsteht der größte magnetische Fluss innerhalb des Kerns 3, während beispielsweise im Bereich der Abschreckbrause 22 kein nennenswerter magnetischer Fluss entsteht. Die Spulenaufnahme 18, die Abschreckbrause 22 und die Anschlussrohre 26 sind aus Kunststoff und sind somit weder magnetisierbar noch elektrisch leitfähig. Daher haben sie keinen nennenswerten Einfluss auf die Ausbildung des Magnetfelds. Im Bereich der Werkstückaufnahme 11 wird das Magnetfeld vom Kern 3 auf das Werkstück 2 übertragen, so dass im Werkstück 2 ein Wirbelstrom entsteht, der zur Erhitzung führt.

Nach dem Erhitzen, also nach dem Abschalten des Induktionsstromes, wird das Werkstück abgeschreckt, indem es mittels der Abschreckbrause 22 mit Wasser beaufschlagt wird. Nach dem Abschrecken ist das Werkstück in Wesentlichen fertig gehärtet.

Sind viele Härtevorgänge pro Zeiteinheit gefordert, so kann die Vorrichtung 1 multipliziert werden. Beispielsweise können drei Vorrichtungen 1 vorgesehen werden, die jeweils versetzt zueinander die Zyklusschritte Werkstückwechsel, Erhitzen und Abschrecken durchführen. Da jeweils nur an einer der drei Vorrichtungen 1 erhitzt wird, kann mit einer vergleichsweise niedrigen Maximallast im Bereich der Spannungserzeugung, -regelung und -schaltung gerechnet werden, was den apparativen Aufwand niedrig hält.

### Bezugszeichenliste

Vorrichtung zur induktiven Erwärmung und Kombination einer derartigen Vorrichtung mit einem Werkstück
- 1: Vorrichtung
- 2: Werkstück
- 3: Kern
- 4: Außenelement
- 5: Innenelement
- 6: Verbindung
- 7: Zwischenraum
- 8: Öffnung
- 9: Bohrung
- 10: Aussparung
- 11: Werkstückaufnahme
- 12: Stirnseite des Innelements 5 an der Werkstückaufnahme 11
- 13: Aufnahmescheibe
- 14: Spalt
- 15: Aufnahmedorn
- 16: Schaft des Aufnahmedorns 15
- 17: Teller des Aufnahmedorns 15
- 18: Spulenaufnahme
- 19: Durchbrechung
- 20: Anschlussleitung der Induktionsspule 21
- 21: Induktionsspule
- 22: Abschreckbrause
- 23: Profil der Abschreckbrause 22
- 24: Brausenkanal
- 25: Öffnung der Abschreckbrause 22
- 26: Anschlussrohr
- 27: Oberteil des Kerns 3
- 28: Unterteil des Kerns 3
- A: Längsachse

## Patentansprüche

1. Vorrichtung zur induktiven Erwärmung, insbesondere Härtung, von Werkstücken (2), mit einer Induktionsspule (21) zum Umfassen des Werkstücks (2) und einem Kern (3) als Feldführung, **dadurch gekennzeichnet, dass** radial innerhalb der Induktionsspule (21) eine Abschreckbrause (22) angeordnet ist.

2. Vorrichtung nach Anspruch 1, **dadurch gekennzeichnet, dass** die Abschreckbrause (22) nicht magnetisierbar und insbesondere nicht elektrisch leitfähig ist.

3. Vorrichtung nach Anspruch 1 oder 2, **dadurch gekennzeichnet, dass** der Kern (3) ein im Wesentlichen rohrförmiges Außenelement (4) und innerhalb dessen ein im Wesentlichen zylindrisches Innenelement (5) aufweist, dass zwischen Innen- und Außenelement (4, 5) jeweils eine stirnseitige Verbindung (6) besteht und dass das Innenelement (5) eine quer zu seiner Längsrichtung angeordnete, das Innenelement (5) insbesondere vollständig durchsetzende Aussparung (10) als Werkstückaufnahme (11) aufweist.

4. Vorrichtung nach Anspruch 3, **dadurch gekennzeichnet, dass** der Kern (3) im Bereich der die stirnseitige Verbindung (6) eine Öffnung (8) aufweist, durch die mindestens eine Anschlussleitung (20) der Induktionsspule (21) verläuft.

5. Vorrichtung nach einem der vorstehenden Ansprüche, **dadurch gekennzeichnet, dass** der Kern (3) zum Einlegen und Herausnehmen eines Werkstücks (2) öffenbar und schließbar ist.

6. Vorrichtung nach einem der vorstehenden Ansprüche, **dadurch gekennzeichnet, dass** die Induktionsspule (21) aus einer Hochfrequenzlitze gebildet ist.

7. Vorrichtung nach einem der vorstehenden Ansprüche, **dadurch gekennzeichnet, dass** die Induktionsspule (21) mehr als eine Windung, insbesondere mehr als zwei und vorzugsweise mehr als vier Windungen aufweist.

8. Kombination eines Werkstücks (2) und einer Vorrichtung (1) zur induktiven Härtung von Werkstücken (2), insbesondere nach einem der vorstehenden Ansprüche, mit einer Induktionsspule (21) und einem Kern (3) als Feldführung, wobei die Induktionsspule (21) das Werkstück (2) mit einem radialem Abstand umschließt, **dadurch gekennzeichnet, dass** der minimale radiale Abstand zwischen Werkstück (2) und Induktionsspule (21) mindestens 5 mm, insbesondere mehr als 10 mm, beträgt.

9. Kombination nach Anspruch 8, **dadurch gekennzeichnet, dass** der Kern (3) ein im Wesentlichen rohrförmiges Außenelement (4) und innerhalb dessen ein im Wesentlichen zylindrisches Innenelement (5) aufweist, dass zwischen Innen- und Außenelement (4, 5) jeweils eine stirnseitige Verbindung (6) besteht und dass das Innenelement (5) eine quer zu seiner Längsrichtung angeordnete, das Innenelement (5) insbesondere vollständig durchsetzende Aussparung (10) als Werkstückaufnahme (11) aufweist.

10. Kombination nach Anspruch 9, **dadurch gekennzeichnet, dass** das Werkstück (2) das Innenelement (5) im Wesentlichen nicht radial überragt.
